(19) **Europäisches Patentamt**
**European Patent Office**
**Office européen des brevets**

(11) **EP 3 101 592 A1**

(12) **EUROPEAN PATENT APPLICATION**

(43) Date of publication:
**07.12.2016 Bulletin 2016/49**

(51) Int Cl.:
**G06K 9/00** *(2006.01)*  **G06K 9/03** *(2006.01)*
**G06K 9/32** *(2006.01)*  **H04N 5/232** *(2006.01)*

(21) Application number: **16172583.3**

(22) Date of filing: **02.06.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **02.06.2015 US 201562170108 P**

(71) Applicant: **Thomson Licensing
92130 Issy-les-Moulineaux (FR)**

(72) Inventors:
• **ASH, Arden A**
  **Los Angeles, CA 90017 (US)**
• **HELLIER, Pierre**
  **35 576 Cesson Sévigné (FR)**
• **LEBRUN, Marc**
  **35 576 Cesson Sévigné (FR)**

(74) Representative: **Rolland, Sophie
TECHNICOLOR
1-5, rue Jeanne d'Arc
92130 Issy-les-Moulineaux (FR)**

(54) **METHOD AND APPARATUS FOR SCORING AN IMAGE ACCORDING TO AESTHETICS**

(57) Methods and apparatus for scoring an image based on visual criteria are described. A method includes computing a local blur map for the image, determining a bounding box in the image comprising a largest sharp region in the image based on the local blur map, scoring the image according to at least one of a ratio of bounding box size to image size, a ratio of the bounding box length to the bounding box height, a relative position of the bounding box in the image. Another method includes selecting an image among a plurality of images by scoring each image of the plurality of images according to the scoring method and selecting an image based on the score. The apparatus includes a memory and processor for performing the any of the selecting or the scoring method.

EP 3 101 592 A1

```
        ┌──────────────────┐
        │   INPUT IMAGE    │ ~ 510
        └──────────────────┘
                 │
                 ▼
        ┌──────────────────┐
        │     COMPUTE      │ ~ 520
        │  LOCAL BLUR MAP  │
        └──────────────────┘
                 │
                 ▼
        ┌──────────────────┐
        │    DETERMINE     │ ~ 530
        │  BOUNDING BOX    │
        └──────────────────┘
                 │
                 ▼
        ┌──────────────────┐
   500 →│  COMPUTE SCORE   │ ~ 540
        └──────────────────┘
```

**FIG. 5**

**Description**

Technical Field

The present disclosure generally relates to a method and apparatus for scoring an image based on visual criteria. More specifically, the present disclosure relates to scoring an image based on a local blur map and selecting an image among a plurality of images based on the score.

Description of Background

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

The context of the invention is the automatic selection of pictures, among a group of stills (could be all the frames of a video), that represent "interesting" pictures among the group. The notion of interestingness is both subjective and application-dependent, and will be explained hereafter.

In the context of a media service or video content provider, automatic selection can be used to pre-select some stills, among which some will be used to populate a media details page/website/and the like. These images should be visually attractive, should reflect the content (place, actors, atmosphere), but shall not spoil the story.

Alternatively, in the context of a personal media server, automatic selection can be used to pre-select some stills, among which some will be used to represent the content of personal media server.

Therefore, there is a need for an automated scoring of image responsive to visual criteria representative of interestingness.

Summary

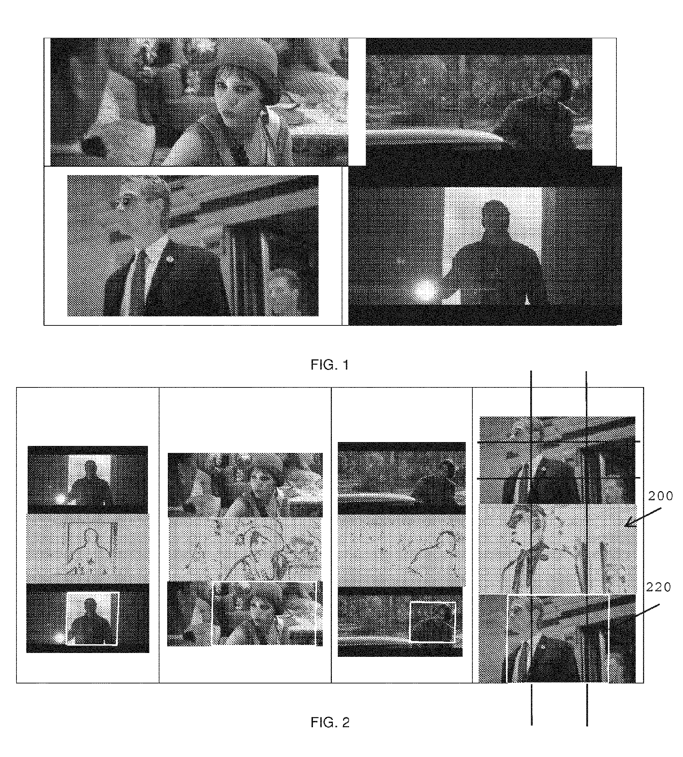

The main idea of that disclosure is that "interesting" images correspond to a combination of a vertical sharp portion (ideally, a face or a character) on a blurred background. Examples of such a combination are displayed in FIG. 1 which presents examples of valuable images, where the object of interest is sharp over a blurred background. Advantageously, the sharpness of the object of interest on blurred background accentuates the visual attractiveness of the image. In addition, it can be seen from these pictures that a cinematographer can composite a scene so that an object of interest can be placed in a various section of the picture. The rule of third, the golden ratio, are non-limited examples of various approaches of how to place objects in a scene.

To that determine images responsive to visual criteria representative of interestingness, a method that scores the images according to the sharpness of a region with respect to whole image is therefore disclosed. The disclosed method comprises analyzing the global blur of the image, as well as the local blur. Advantageously, the method allows extracting objects of interest from an image among a sequence of images.

Thus, according to an embodiment of the present disclosure, a method for scoring an image is disclosed. The method comprises computing a local blur map for the image; determining a bounding box in the image comprising the largest sharp region in the image based on the local blur map; scoring the image according to at least one of a ratio of bounding box size to image size, a ratio of the bounding box length to the bounding box height, a position of the bounding box in the image.

According to a particular characteristic, the local blur map includes a blur metric for each pixel of the image. In other words, the local blur map is a spatial indication of blur (inversely sharpness) in the image, each metric of the local blur map associated with a given pixel carrying an indication of a blur level (inversely sharp level) for the given pixel.

According to another particular characteristic, the pixel-wise blur metric is an average sum of singular values determined for a patch centered on the pixel of the image using a Singular Value Decomposition.

According to another particular characteristic, the pixel-wise blur metric is an average sum of singular values determined for a patch centered on the pixel of a processed image using a Singular Value Decomposition, wherein the processed image is a difference image between the image and a blurred version of the image.

According to another particular characteristic, the local blur map is a binary map, for instance obtained by a thresholding method applied to the local blur metrics, and wherein the largest sharp region in the image is obtained by analyzing the connected components of the binary local blur map.

According to another particular characteristic, the scoring further includes a global blur metric of the image.

According to a further embodiment, a method for selecting an image among a plurality of images is described. The method comprises scoring each image of the plurality of images according to the disclosed scoring method in any of its variant and selecting an image based on the scores.

According to a further embodiment, an apparatus implementing the methods, being the scoring method in any of its variant or the selecting method in any of its variant is described.

According to a further embodiment, a computer program product comprising program code instructions to execute of the steps of the methods according to any of the embodiments and variants disclosed when this program is executed on a computer is disclosed.

A processor readable medium having stored therein instructions for causing a processor to perform at least the steps of the methods according to any of the embodiments and variants is disclosed.

A non-transitory program storage device is disclosed that is readable by a computer, tangibly embodies a program of instructions executable by the computer to perform the methods according to any of the embodiments and variants is disclosed.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

Brief Summary of the Drawings

These and other aspects, features, and advantages of the present disclosure will be described or become apparent from the following detailed description of the preferred embodiments, which is to be read in connection with the accompanying drawings.

FIG. 1 represents images displaying a combination of sharp portion on a blurred background in accordance with the present disclosure;

FIG. 2 represents the local blur map and bounding box for images of FIG. 1 in accordance with the present disclosure;

FIG. 3 is a block diagram of an apparatus for implementing any of the methods in accordance with the present disclosure;

FIG. 4 is a flowchart of a method for selecting an image in accordance with the present disclosure;

FIG. 5 is a flowchart of a method for scoring an image in accordance with the present disclosure; and

FIG. 6 represents a piecewise linear cost function for a score representative of the rule of third in accordance with the present disclosure.

It should be understood that the drawing(s) are for purposes of illustrating the concepts of the disclosure and are not necessarily the only possible configuration for illustrating the disclosure.

Detailed Description

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure addresses issues related extraction of objects of interest from an image, the image belonging to a sequence of video frames or to a database of still pictures.

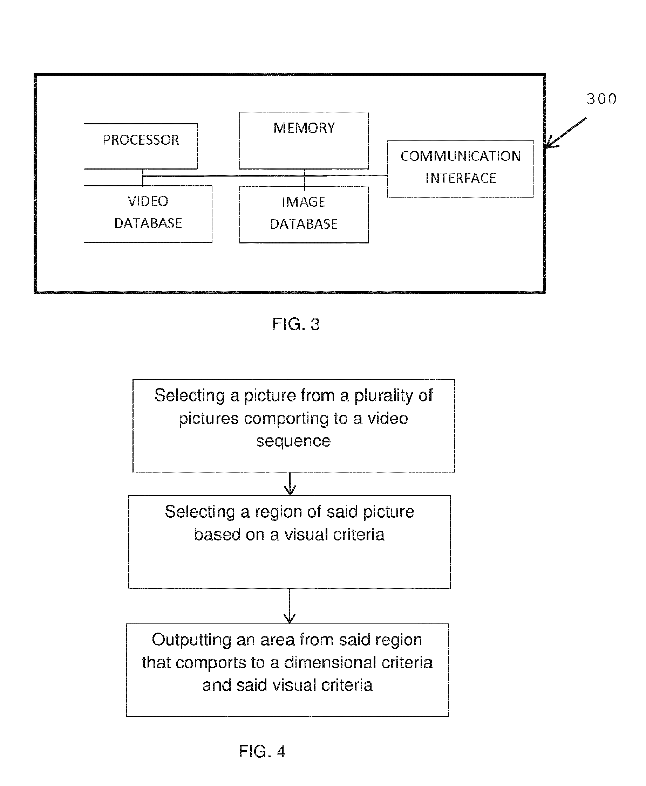

Turning to FIG. 3, a block diagram of an apparatus 300 used for processing images in accordance with the present disclosure is shown. The apparatus or electronic device 300 includes one or more processors (PROCESSOR) coupled to video or image database (VIDEO DATABASE, IMAGE DATABASE), a memory (MEMORY), and communication interface (COMMUNICATION INTERFACE). Each of these elements will be discussed in more detail below. Additionally, certain elements necessary for complete operation of electronic device 300 will not be described here in order to remain concise as those elements are well known to those skilled in the art.

Images are received in electronic device 300 from a content source via the communication interface, stored in the database and provided to processor(s). According to non-limitative examples, the images are still pictures, for instance personal pictures captured by a user with a camera and stored in the image database, or are frames extracted from a video content, for instance frames of a video trailer. According to different embodiments of the present principles, the content source belongs to a set comprising:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- a picture capturing circuit (e.g. a sensor such as, for example, a CCD (or Charge-Coupled Device) or CMOS (or Complementary Metal-Oxide-Semiconductor)).

The processor(s) controls the operation of the electronic device 300. The processor(s) runs the software that operates electronic device 300 and further provides the functionality associated with managing image/video database such as, but not limited to, processing, scoring, selecting and displaying. The processor(s) also handles the transfer and processing of information between image/video database, memory, and communication interface. The processor(s) may be one or more general purpose processors, such as microprocessors, that operate using software stored in memory. Processor(s) may alternatively or additionally include one or more dedicated signal processors that include a specific functionality (e.g., decoding).

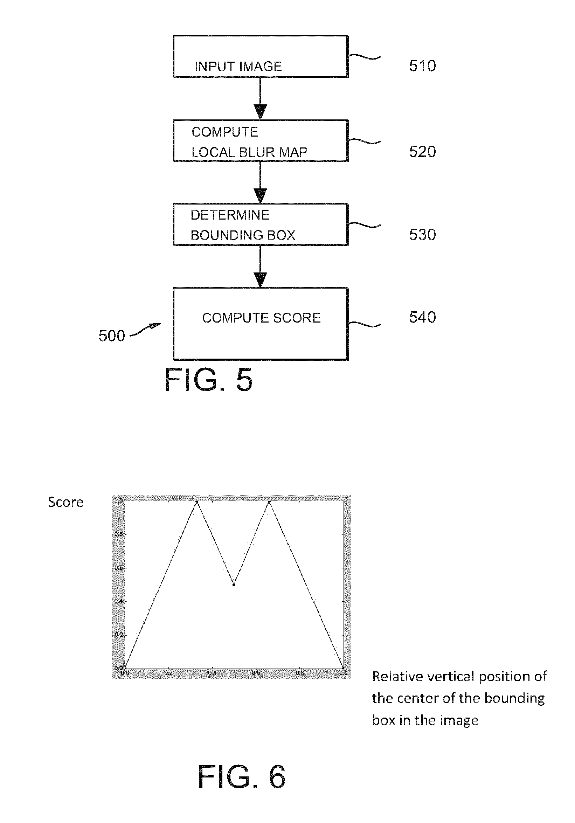

Optionality, the electronic device 300 may include one or more dedicated hardware (module, functional means) that performs the scoring or selecting method according to any of their variants as described with FIG. 5.

The memory stores software instructions and data to be executed by processor(s). Memory may also store temporary intermediate data and results as part of the processing of the images (local blur map, score), either by processor(s) or dedicated hardware. The memory may be implemented using volatile memory (e.g., static RAM), non-volatile memory (e.g., electronically erasable programmable ROM), or other suitable media.

The video database and image database store the data/video/images used and processed by the processor in executing the scoring or the selection of images. In some cases, the resulting scores or selected images may be stored for later use, for instance, as part of a later request by the user. Video database and image database may include, but is not limited to magnetic media (e.g., a hard drive), optical media (e.g., a compact disk (CD)/digital versatile disk (DVD)), or electronic flash memory based storage.

The communication interface further allows the electronic device 300 to provide the content (video/images) and associated scores or selected images to other devices over a wired or wireless network. Examples of suitable networks include broadcast networks, Ethernet networks, Wi-Fi enabled networks, cellular networks, and the like. It is important to note that more than one network may be used to deliver data to the other devices.

In operation, the processor(s) or dedicated hardware processes an image from the content (video/image) to produce a score based on the analysis of local blur conformant to the concepts as described with FIG. 5. The score, in conjunction with other data, may be provided to and used by a processing circuit in a user device to further process the content.

In one embodiment, the score based on the analysis of local blur may be used to select an image among a set of images. The set of images may be obtained for a content from various embodiments:

- extraction of frames from a video (such frames being key frames, sampled frames, frames of a trailer),
- selection in an image database for instance based on a semantic information (images of user selected person, images containing an object, a face),
- selection of an image in a plurality of image databases (social media context),
- selection among a database comprising pictures and videos.

Each image of the set of images is scored based on local blur map in any of its variants. Then the score is used to select one or more images: image whose score is above a threshold; image with the highest score... In another variant, the global blur may be used for a preliminary selection of images: among the set of images, a subset is determined with the images presenting a low global blur metric, then among this subset, the image(s) with the highest score is output. In another variant, an image is selected according to the present principles for a section or shot in the video content. A section or shot may include a group of visually-consistent and semantically-coherent frames in the video.

In another embodiment, the processor, memory, and software of FIG. 3 are programmed in an appropriate manner and implement the present principles to extract the interesting frames of a movie, or trailer, by a simple method:

- Rank all frames with the score described previously;
- Identify groups of interesting frames (frame whose score is above a threshold);
- Cluster this group according to their time index, in order to retain only one frame per group. One option is for instance to compute the global blur metric described hereafter, and retain the sharpest image in the group.

In another embodiment, the processor, memory, and software of FIG. 3 are programmed in an appropriate manner and implement the present principles to have the concepts as described with FIG. 4 of a method or apparatus that extracts pictures from video by:

- selecting a picture from a plurality of pictures comporting to a video sequence;
- selecting a region of the picture based on a visual criteria; and
- outputting an area from the region that comports to a dimensional criteria and the visual criteria.

In addition, the present principles can be implemented where copyright information can be added and/or extracted from a picture, metadata, and the like and added to the extracted image.

According to exemplary and non-limitative embodiments, the apparatus 300 is an apparatus, which belongs to a set comprising:

- a mobile device ;
- a communication device ;
- a game device ;
- a set top box;
- a TV set;
- a Blu-Ray disc player;
- a player;
- a tablet (or tablet computer) ;
- a laptop ;
- a display;
- a camera.

It should be understood that the elements set forth in FIG. 3 are illustrative. The apparatus 300 can include any number of elements and certain elements can provide part or all of the functionality of other elements. Other possible implementations will be apparent to one skilled in the art given the benefit of the present disclosure.

Turning to FIG. 5, a flowchart of a method 500 for scoring an image in accordance with the present disclosure is shown.

At step 510, an image to process denoted as *u* is input. According to various application of the scoring method as described with FIG. 3, the image is obtained from, but non-limited to, a video or a database storing still pictures.

At step 520, a local blur map is computed. In an optional variant, a global blur metric is further computed. FIG. 2 shows results of the obtained local blur maps 210. According to a particular characteristic, the local blur map includes a blur metric for each pixel of the image.

The pixel blur metric value may be specifically computed using the luminance information in the image. A specific implementation for a pixel-wise blur metric having properties that are beneficial for use in some situations, such as for extraction of interesting object, is described below.

The blur metric is based on a Singular Value Decomposition (SVD) of the image u as disclosed in "A consistent pixel-wise blur measure for partially blurred images" by X. Fang, F. Shen, Y. Guo, C. Jacquemin, J. Zhou, and S. Huang (IEEE International Conference on Image Processing 2014). The metric is computed on the luminance information, which is basically the average of the three video signal components.

The Multi-resolution Singular Value (MSV) local blur metric is given by

$$u = \sum_{i=1}^{n} \lambda_i e_i$$

(equation 1)

where $\lambda_i\,(1 \leq i \leq n)$ are the eigen values in decreasing order and the $e_i\,(1 \leq i \leq n)$ are rank-1 matrices called the eigen-images.

The idea is that the first most significant eigen-images encode low-frequency shape structures while less significant eigen-images encode the image details. Furthermore for a blurred block, the high frequency details are lost much more significantly in comparison with its low frequency shape structures. Then only the high frequency of the image will be studied, through a Haar wavelet transformation. On the high frequency sub-bands, the metric will be the average singular value, also called Multi-resolution Singular Value (MSV).

As the metric is local or pixel-wise, the description of the code will stand for a patch of size k x k around the current pixel. Let's us denote by P the current patch.

First, the patch P is decomposed by Haar wavelet transform where only horizontal low-pass/vertical high-pass (LH), horizontal high-pass/vertical low-pass (HL) and horizontal high-pass/vertical high-pass (HH) sub-bands or $P_{lh}$; $P_{hl}$ and $P_{hh}$ of size k/2 x k/2 are considered. Patchs or $P_{lh}$; $P_{hl}$ and $P_{hh}$ are obtained by :

$$\forall (i,j) \quad \in \quad [\![1, \frac{\kappa}{2}]\!]^2,$$

$$P_{lh}(i,j) = \frac{1}{2}\left(P(2i, 2j) - P(2i, 2j+1) + P(2i+1, 2j) - P(2i+1, 2j+1)\right)$$

$$P_{hl}(i,j) = \frac{1}{2}\left(P(2i, 2j) + P(2i, 2j+1) - P(2i+1, 2j) - P(2i+1, 2j+1)\right)$$

$$P_{hh}(i,j) = \frac{1}{2}\left(P(2i, 2j) - P(2i, 2j+1) - P(2i+1, 2j) + P(2i+1, 2j+1)\right)$$

(equation 2)

Then a Singular Values Decomposition is applied on each sub-bands Ps to get the K/2 singular values $\{\lambda_{si}\}_i$

Then the local blur metric associated to the patch P is

$$\mathcal{B}_P = \frac{2}{3\kappa} \sum_{s=1}^{3} \sum_{i=1}^{\kappa/2} \lambda_{s_i}$$

(equation 3)

As the local metric is obtained for a whole patch, we need to decide to which pixel this measure will be associated.

As the Haar decomposition need a power of two side blocks, the patch can't be centered around one pixel. Then two variants are disclosed :

- $B_P$ is associated to the top left pixel. The metric remains exactly local, but is shifted;
- $B_P$ is associated to all the pixels belonging to this patch. Then one pixel will have $k^2$ measures that are averaged to get one local metric for each pixel.

According to this latest variant, the blur metric is an average sum of singular values determined for a patch centered on the pixel of the image using a Singular Value Decomposition.

The skilled in the art will appreciate that the most time consuming process is the computation of the SVD. However as the size of the patches is fixed to k= 8, then the SVD is performed on 4x4 matrices. Theoretically the singular values are the square roots of the eigen values of the symmetrized matrices $MM^t$ (where M is the matrix of one sub-band patch Ps). The singular values are the roots of the characteristic polynomial of the symmetrized matrices.

As one can have the explicit solution of the roots of a 4th degree polynom, this solution is way much faster. The simplification is done as following:

- Compute the symmetric matrix $MM^t$;
- Get its characteristic polynomial P;
- Get the four real positive roots of P $\{r_i\}_i$
- Average the singular values $\lambda_i = \sqrt{r_i}$

According to a variant of the thresholding of the local blur map described with respect to step 530, the local blur map is filtered to remove spurious and small activations. To do so, a simple Gaussian filter is used. For instance, a Gaussian filter with $\sigma = 2.5$ is applied to the blur map.

According to another variant, the Gaussian filter is applied to the image itself. Indeed, the blurred edges are detected much sharper than they should be. As the difference between a blur region and a blurred blur region is small while on the contrary the difference between a sharp region and a blurred sharp region is large, the image to get the local MVS based metric is the difference image between the input image and a blurry input image. For instance, the blurry image is obtained by applying a Gaussian blur of $\sigma = 2.5$.

According to this latest variant, the blur metric is an average sum of singular values determined for a patch centered on the pixel of the image using a Singular Value Decomposition, wherein the processed image is a difference image between the image and a blurred version of the image.

Advantageously, in the obtained local blur map, low values of the local blur metric for a pixel correspond to sharp pixels while high values of the local blur metric correspond to blurred pixels. Thus based on the local blur metric, a pixel in the image is labelled as "not blurred" (ie sharp) or "blurred" as described hereafter. According to this convention, the pixels with low values of the local blur are kept after thresholding as sharp pixels.

At step 530, a bounding box 220 is determined in the image, the bounding box including the largest sharp region, the largest sharp region being determined in the image based on the local blur map. Indeed an area such as a rectangle aligned with the image shape is determined. According to a variant, only the 2 vertical borders of the rectangle are determined, the horizontal borders of the rectangle corresponding with the border of the image, as shown on the right most picture of FIG.2. A sharp region is obtained for the pixels having a local blur metric representative of a sharp pixel and labelled as "not blurred". Accordingly, the bounding box may also include blur pixels surrounding the largest sharp region. The skilled in the art of image processing will appreciate that various technics can be used to achieve the determination of a sharp region based on the local blur map.

According to a variant, the local blur map is first filtered by thresholding. Different variants of thresholding methods are for instance described by M. Sezgin and B. Sankur in a "Survey over image thresholding techniques and quantitative performance evaluation" (2004, in Journal of Electronic Imaging 13, 146-165). According to non-limiting examples, the thresholding uses a fixed threshold value or an adaptive thresholding operator as in the Otsu method (described by Nobuyuki Otsu in "A threshold selection method from gray-level histograms", IEEE TRANSACTIONS ON SYSTEMS, MAN, AND CYBERNETICS, VOL. SMC-9, NO. 1, JANUARY 1979, 62-66). Advantageously, the filtered local blur map is a binary map. The binary value attached to a pixel in the image is thus naturally representative of the label "not blurred" (ie sharp, for instance associated to the value '0') or "blurred" (for instance associated to the value '1'). Yet in other variant which is combined or used instead of the thresholding, the local blur map is filtered with Gaussian filter as previously described so as to obtain to binary map.

Then according to a particular characteristic, the connected components of the binary map are analyzed so as to find out the sets of spatially connected pixels of the binary map. Any algorithm can be used at that stage. For instance, in "Fast and Memory Efficient 2-D Connected Components Using Linked Lists of Line Segments" (IEEE TRANSACTIONS ON IMAGE PROCESSING, VOL. 19, NO. 12, DECEMBER 2010, 3222-3231) J. De Bock and W. Philips present an efficient approach to the problem of finding the connected components in binary images.

Finally, a bounding box encompassing the main connected component, i.e. the whole largest connected component, is computed. The bounding box thus includes the largest sharp region of the image.

At step 540, a score is computed for the image. According to different variants, three features, computed for the bounding box, are used in any combination to determine the image score. According to a further variant, a global blur metric is also used to compute the image score.

According to a first characteristic, the feature is the size of the bounding box. Then the ratio between the bounding box size and the image size is computed. From this ratio $r_s$, a score is computed as $S_s = -4 * r_s^2 + 4 * r_s$. The score is maximum for $r_s = 0.5$, and is zero for $r_s = 0$ or $r_s = 1$.

According to a second characteristic, the feature is the aspect ratio of the bounding box. The aspect ratio, being the ratio of the bounding box length to the bounding box height, is used directly as the score $S_\alpha$.

According to a third characteristic, the feature is the horizontal position of the bounding box. The quality of this position is inferred from the rule of third. The rule of the third states that an image should be imagined as divided into nine equal parts by two equally spaced horizontal lines and two equally spaced vertical lines, and that important compositional elements should be placed along these lines or their intersections. Thus, the score is expected to be maximal when the center of the bounding box is positioned on those lines vertical lines at $\frac{1}{3}$ or $\frac{2}{3}$ of the image as illustrated on FIG. 2. For this score $S_p$, a piecewise linear cost can be used, as displayed in FIG. 6.

According to a further fourth characteristic, the global blur metric $B$ is determined so as to be included in the score computation.

The generation of a global blur metric is also based on the analysis of input image. The blur metric may be specifically computed using the luminance information in the image.

According to a particular variant, a separate blur metric for the horizontal direction and vertical direction, denoted as $B_h$ and $B_V$ are computed. The final blur metric is given by the following:

$$B = \max(B_h, B_V). \hspace{4cm} \text{(equation 4)}$$

For the sake of conciseness, only the computation of $B_h$ will be described as the computation of $B_V$ is the same procedure in a vertical instead of horizontal direction.

With the original input image denoted as u, processing (as described in processing block 520 described in FIG. 5 or in processor(s) described in FIG. 3) produces a blurred image in the chosen direction. The blurry image is denoted as $\tilde{u}$ and denoted by the following equation:

$$\forall (i, j), \tilde{u}(i, j) = \frac{1}{2\kappa + 1} \sum_{k=-\kappa}^{\kappa} u(i, j + k). \hspace{2cm} \text{(equation 5)}$$

The gradient, denoted as D*u,* is computed for both the original image *u* and the blurry image $\tilde{u}$ in the chosen direction as:

$$\forall (i, j), Du(i, j) = |u(i, j + 1) - u(i, j - 1)|, \hspace{2cm} \text{(equation 6)}$$

and

$$\forall (i, j), D\tilde{u}(i, j) = |\tilde{u}(i, j + 1) - \tilde{u}(i, j - 1)|. \hspace{2cm} \text{(equation 7)}$$

The sum of the gradients of the image, denoted as Su, is computed and the sum of the variance of the gradients, denoted as Sv, is computed. It is important to note that the variance is evaluated only when the absolute differences between the gradient of the original image and the gradient of the blurry image are greater than zero. The condition may be denoted by the following:

$$v(i,j) = \begin{cases} Du(i,j) - D\tilde{u}(i,j) & \text{if} & Du(i,j) - D\tilde{u}(i,j) > 0 \\ 0 & \text{otherwise} \end{cases}$$

(equation 8)

As a result, Su and Sv may be represented by the following:

$$Su = \sum_{i,j} Du(i,j) \qquad Sv = \sum_{i,j} v(i,j).$$

(equation 9)

Finally, the result is normalized between [0, 1] to obtain the following:

$$\mathcal{B}_h = \begin{cases} \dfrac{Su - Sv}{Su} & \text{if} & Su > 0 \\ 1 & \text{otherwise} \end{cases}$$

(equation 10)

The computation of the blur metric may alternatively be determined by simplifying the computation of the gradient for the blurred image as described in the following sets of equations:

$$D\tilde{u}(i,j) = |\tilde{u}(i,j+1) - \tilde{u}(i,j-1)|$$

(equation 11)

$$= \frac{1}{2\kappa + 1} |\sum_{k=-\kappa}^{k=\kappa} u(i,j+1+k) - \sum_{k=-\kappa}^{k=\kappa} u(i,j-1+k)|$$

(equation 12)

$$= \frac{1}{2\kappa + 1} |\sum_{k=-\kappa+1}^{k=\kappa+1} u(i,j+k) - \sum_{k=-\kappa-1}^{k=\kappa-1} u(i,j+k)|$$

(equation 13)

$$= \frac{1}{2\kappa + 1} |u(i,j+\kappa+1) + u(i,j+\kappa) - u(i,j-\kappa) - u(i,j-\kappa-1)|$$

(equation 14)

The determination of the blur metric may alternatively be realized by computing the sum of the gradient of image and variation of the gradients and taking into account only the pixels for which the gradient of the original image is greater than the gradient of the blurred image resulting in the following:

$$Su = \sum_{i,j \text{ such that } Du(i,j)>D\tilde{u}(i,j)} Du(i,j) \qquad Sv = \sum_{i,j \text{ such that } Du(i,j)>D\tilde{u}(i,j)} v(i,j).$$

(equation 15)

The computation of the blur metric may include linearization of the blur metric over the range of [0,1] in order to have better subjectivity (i.e., that the interval of confidence to identify the amount of blurriness from the blur metric is better). The blur metric may be linearized by adjusting the curve to be more linear and monotonic over a wider range of the interval [0,1] for a range of Gaussian blur. In order to achieve this, a polynomial function P is applied to the computed blur metric B (e.g., the combination of $B_h$ and $B_V$).

For example, one possible polynomial P is found from the minimization of the following:

$$\min_{a,b,c,d,e} \left( \sum_n \left( ay_n^4 + by_n^3 + cy_n^2 + dy_n + e - x_n \right) \right)^2.$$

(equation 16)

The resulting polynomial is shown as the following:

$$\begin{pmatrix} \sum_n y_n^8 & \sum_n y_n^7 & \sum_n y_n^6 & \sum_n y_n^5 & \sum_n y_n^4 \\ \sum_n y_n^7 & \sum_n y_n^6 & \sum_n y_n^5 & \sum_n y_n^4 & \sum_n y_n^3 \\ \sum_n y_n^6 & \sum_n y_n^5 & \sum_n y_n^4 & \sum_n y_n^3 & \sum_n y_n^2 \\ \sum_n y_n^5 & \sum_n y_n^4 & \sum_n y_n^3 & \sum_n y_n^2 & \sum_n y_n \\ \sum_n y_n^4 & \sum_n y_n^3 & \sum_n y_n^2 & \sum_n y_n & \sum_n 1 \end{pmatrix} \begin{pmatrix} a \\ b \\ c \\ d \\ e \end{pmatrix} = \begin{pmatrix} \sum_n x_n y_n^4 \\ \sum_n x_n y_n^3 \\ \sum_n x_n y_n^2 \\ \sum_n x_n y_n \\ \sum_n x_n \end{pmatrix}$$

(equation 17)

The polynomial P may be determined experimentally, or otherwise learned by processing a set of different images and different values of blur. The coefficients for polynomial P may be fixed for the computation based on the determination. An exemplary set of coefficients is shown below:

a = -18.6948447
b = 34.97138362
c = -18.30364716
d = 10.22577058
e = -0.09037105

As a result, a global metric for blur, as described earlier, may be determined or otherwise determined by first obtaining the blur measure $B$ as described in above (e.g., equation 10). An offset value equal to $2/(2\kappa+1)$ is subtracted from the blur measure B in order to obtain a minimal value that is close to zero for perfectly sharp images, where $\kappa$ is related to a property of the video processing filter. The shifted value for the blur measure $B$ is linearized by applying a polynomial function to the shifted value for the blur measure $B$ in order to get a maximal value close to one for highly blurred images (e.g., Gaussian blur> 5).

Then, a score representative of an "interestingness" value is determined for the image being a combination of the scores $S_s$, $S_\alpha$ and $S_p$. Any function $f$ of the scores $S_s$, $S_\alpha$ and $S_p$ increasing with the scores, is compliant with the present principles. For instance, the total score can be simply defined as

$$S = S_s$$

or,

$$S = S_a$$

or,

$$S = S_p$$

or,

$$S = S_s + S_a + S_p$$

In yet another variant, the score is normalized with the measure of the global blur. Accordingly, the total score is defined as: $S = \dfrac{S_s * S_a * S_p}{B}$ .

Although the embodiments which incorporate the teachings of the present disclosure have been shown and described in detail herein, those skilled in the art can readily devise many other varied embodiments that still incorporate these teachings. Having described preferred embodiments for an apparatus and method for scoring an image using a spatial indication of blurring, it is noted that modifications and variations can be made by persons skilled in the art in light of the above teachings. It is therefore to be understood that changes may be made in the particular embodiments disclosed which are within the scope of the teachings as outlined by the appended claims.

**Claims**

1. A method (500) for scoring an image comprising:

   • Computing (520) a local blur map for the image;
   • Determining (530) a bounding box in the image comprising a largest sharp region in the image based on the local blur map;
   • Scoring (540) the image according to at least one of a ratio of bounding box size to image size, a ratio of the bounding box length to the bounding box height, a relative position of the bounding box in the image.

2. The method (500) of claim 1, wherein the local blur map includes a blur metric for each pixel of the image.

3. The method (500) of claim 2, wherein the blur metric is an average sum of singular values determined for a patch centered on said pixel of said image using a Singular Value Decomposition.

4. The method (500) of claim 2, wherein the blur metric is an average sum of singular values determined for a patch centered on said pixel of a processed image using a Singular Value Decomposition, wherein the processed image is a difference image between said image and a blurred version of said image.

5. The method (500) of any of claim 1 to 4, wherein the local blur map is a binary map and wherein the largest sharp region in the image is obtained by analyzing the connected components of the binary local blur map.

6. The method (500) of any of claim 1 to 5, wherein scoring further comprises a global blur metric of the image.

7. A method for selecting an image among a plurality of images comprising

   • Scoring each image of said plurality of images according to the method according to any of claims 1 to 6;
   • Selecting an image based on the scores.

8. An apparatus (300) comprising a processor, coupled to a memory, configured to perform the steps of any of the claims 1 to 6.

9. The apparatus according to claim 8, wherein said apparatus belongs to a set comprising:

  • a mobile device ;
  • a communication device ;
  • a game device ;
  • a set top box;
  • a TV set;
  • a Blu-Ray disc player;
  • a player;
  • a tablet (or tablet computer) ;
  • a laptop ;
  • a display;
  • a camera.

10. An apparatus (500) for scoring an image comprising means for:

  • Computing (520) a local blur map for the image;
  • Determining (530) a bounding box in the image comprising a largest sharp region in the image based on the local blur map;
  • Scoring (540) the image according to at least one of a ratio of bounding box size to image size, a ratio of the bounding box length to the bounding box height, a relative position of the bounding box in the image.

11. A computer program product comprising program code instructions to execute the steps of the method according to any of claims 1 to 6 when this program is executed on a computer.

12. A processor readable medium having stored therein instructions for causing a processor to perform the steps of the method according to any of claims 1 to 6 when this program is executed on a computer.

13. A non-transitory program storage device, readable by a computer, tangibly embodying a program of instructions executable by the computer to perform the steps of the method according to any of claims 1 to 6.

FIG. 1

FIG. 2

PROCESSOR

MEMORY

COMMUNICATION
INTERFACE

VIDEO
DATABASE

IMAGE
DATABASE

300

FIG. 3

Selecting a picture from a plurality of
pictures comporting to a video
sequence

Selecting a region of said picture
based on a visual criteria

Outputting an area from said region
that comports to a dimensional criteria
and said visual criteria

FIG. 4

INPUT IMAGE                510

COMPUTE
LOCAL BLUR MAP             520

DETERMINE
BOUNDING BOX               530

500

COMPUTE SCORE             540

# FIG. 5

Score

Relative vertical position of
the center of the bounding
box in the image

# FIG. 6

Europäisches
Patentamt

European
Patent Office

Office européen
des brevets

# EUROPEAN SEARCH REPORT

Application Number

EP 16 17 2583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YIWEN LUO ET AL: "Photo and Video Quality Evaluation: Focusing on the Subject", 12 October 2008 (2008-10-12), COMPUTER VISION - ECCV 2008; [LECTURE NOTES IN COMPUTER SCIENCE], SPRINGER BERLIN HEIDELBERG, BERLIN, HEIDELBERG, PAGE(S) 386 - 399, XP019109271, ISBN: 978-3-540-88689-1 | 1,2,5-13 | INV.<br>G06K9/00<br>G06K9/03<br>G06K9/32<br>H04N5/232 |
| Y | * the whole document * | 3,4 | |
| A | BIRGIT MALLON ET AL: "Brain intersections of aesthetics and morals: perspectives from biology, neuroscience, and evolution", FRONTIERS IN HUMAN NEUROSCIENCE, vol. 54, no. 66, 21 March 2014 (2014-03-21), page 367, XP055307017, DOI: 10.1353/pbm.2011.0032 * page 3, left-hand column * | 1 | |
| Y,D | FANG X ET AL: "A consistent pixel-wise blur measure for partially blurred images", 2014 IEEE INTERNATIONAL CONFERENCE ON IMAGE PROCESSING (ICIP 2014) : PARIS, FRANCE, 27 - 30 OCTOBER 2014, IEEE, PISCATAWAY, NJ, 27 October 2014 (2014-10-27), pages 496-500, XP002753400, ISBN: 978-1-4799-5751-4 * the whole document * | 3,4 | TECHNICAL FIELDS SEARCHED (IPC)<br><br>G06K<br>H04N |

-/--

The present search report has been drawn up for all claims

| Place of search | Date of completion of the search | Examiner |
|---|---|---|
| The Hague | 4 October 2016 | Neubüser, Bernhard |

Europäisches
Patentamt

European
Patent Office

Office européen
des brevets

## EUROPEAN SEARCH REPORT

Application Number

EP 16 17 2583

### DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| A | AYDIN TUNC OZAN ET AL:  "Automated Aesthetic Analysis of Photographic Images", IEEE TRANSACTIONS ON VISUALIZATION AND COMPUTER GRAPHICS, IEEE SERVICE CENTER, LOS ALAMITOS, CA, US, vol. 21, no. 1, 1 January 2015 (2015-01-01), pages 31-42, XP011565172, ISSN: 1077-2626, DOI: 10.1109/TVCG.2014.2325047 [retrieved on 2014-11-25] * the whole document *<br>----- | 1-13 | |

TECHNICAL FIELDS
SEARCHED      (IPC)

The present search report has been drawn up for all claims

| Place of search | Date of completion of the search | Examiner |
|---|---|---|
| The Hague | 4 October 2016 | Neubüser, Bernhard |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **X. FANG ; F. SHEN ; Y. GUO ; C. JACQUEMIN ; J. ZHOU ; S. HUANG.** A consistent pixel-wise blur measure for partially blurred images. *IEEE International Conference on Image Processing,* 2014
- **M. SEZGIN ; B. SANKUR.** Survey over image thresholding techniques and quantitative performance evaluation. *Journal of Electronic Imaging,* 2004, vol. 13, 146-165

- **NOBUYUKI OTSU.** A threshold selection method from gray-level histograms. *IEEE TRANSACTIONS ON SYSTEMS, MAN, AND CYBERNETICS,* January 1979, vol. SMC-9 (1), 62-66
- Fast and Memory Efficient 2-D Connected Components Using Linked Lists of Line Segments. *IEEE TRANSACTIONS ON IMAGE PROCESSING,* December 2010, vol. 19 (12), 3222-3231